# EUROPEAN PATENT APPLICATION

(11) **EP 2 679 119 A1**
(43) Date of publication of application: **01.01.2014**
(21) Application number: 12748935.9
(22) Date of filing: 15.02.2012
(51) Int. Cl.: A47J 17/02

(54) **A NEW-STYLE PEELING DEVICE**

(30) Priority: 22.02.2011 CN 201110042763
(71) Applicant: Han, Fang, Wuhan, Hubei 430066 (CN)
(72) Inventor: Han, Fang, Wuhan, Hubei 430066 (CN)
(74) Representative: Dossmann, Gérard
(86) International application number: PCT/CN2012/071144
(87) International publication number: WO 2012/113298

(57) **Abstract**

A new-style peeling device comprises a blade (1) and a blade bracket (2) whose lower end is fixed with a handle. A rotating shaft (4) to support the blade is arranged at the top of the blade bracket (2). Ends of the blade (1) are equipped with a shaft sleeve (5) that is matched with the rotating shaft (4). The blade is movably connected with the rotating shaft of the blade bracket (2) through the shaft sleeve (5). The invention can peel the object with big plane surface, and is suitable for peeling vegetables and fruits, etc.

## Description

### Technology field

The invention involves in a kind of cutter, especially a kind of new-style peeling device.

### Background technology

Before this invention is put forward, a peeler is equipped with the function of security, fast and efficient when peeling, thus it becomes the common peeling tool for people. The structure of general peeler is that the end of blade is equipped with rotating shaft; the upper end of blade bracket is equipped with installation hole used for supporting the blade as described, and the top of blade bracket is higher than blade as described. As for the peeler which the patent number is 200520058987.9, the blade is located in the bracket; it is hard to guarantee that the whole blade is completely in contact with the objects to be peeled when peeling. Therefore, when using the peeler to peel the object of big plane surface, the big plane surface of the object would be impeded by the top of blade bracket, result in inaccessibility to peeling due to blade cannot reach the big plane surface of the object.

### Contents of the invention

The purpose of this invention is to overcome the shortage of background technology above, provide a newstyle peeling device with simple structure, low cost and enable to peel for the objects of big plane surface. In order to achieve the above purpose, a new-style peeling device is made, comprising a blade and a blade bracket whose lower end is fixed with a handle. A rotating shaft for supporting the blade is arranged at the top of the blade bracket. Ends of the blade are equipped with a shaft sleeve that matches the rotating shaft. The blade is movably connected with the rotating shaft of the blade bracket through the shaft sleeve.

According to the above scheme, the rotating shaft arrangement can be divided into two cases:
First, place the rotating shaft at the inside of blade bracket;
Second, place the rotating shaft at the outside of blade bracket.

Compared with the existing technology, the superiority of this invention fully shows at the advantage of simple structure, low cost, easy to use and efficient, is also able to peel big plane surface of the objects.

It is preferably that a chip is inserted in any component in accordance with the peeler of this invention. In this way, archival information of this peeler made by manufacturer can be marked on chips, thereby prevent the counterfeit and forgery, and is conducive to build up a brand.

### Figure legends

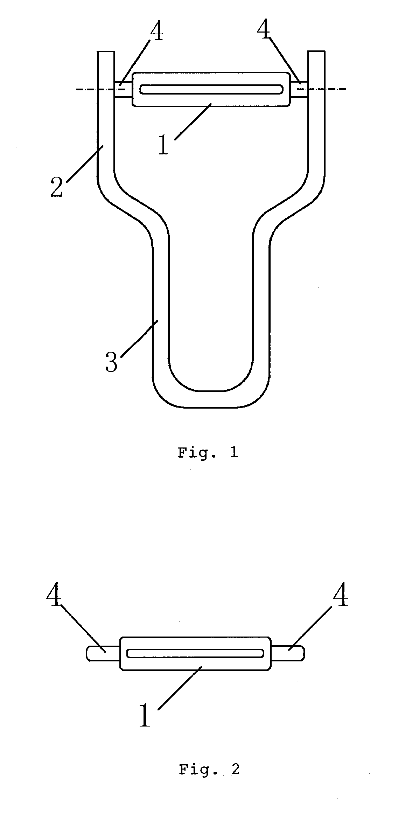

Fig. 1 is the structure diagram of existing peeler;
Fig. 2 is the structure diagram of blade of existing peeler;

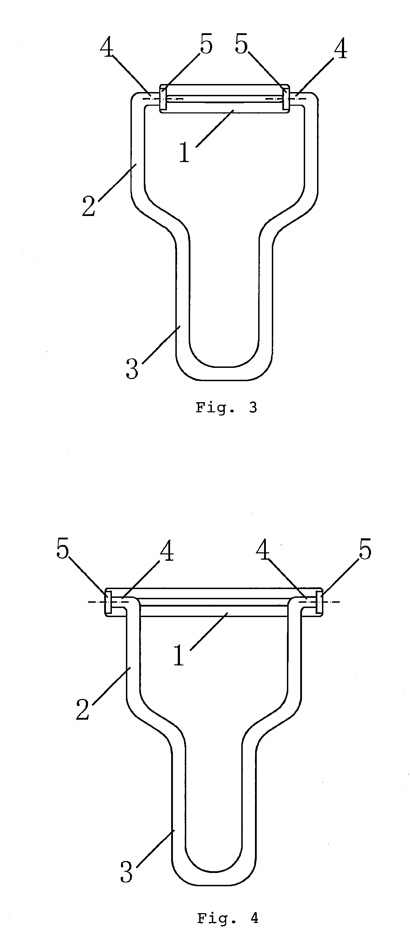

Fig. 3 is the structure diagram of example 1 implementation in accordance with the peeler of the invention;
Fig. 4 is the structure diagram of example 2 implementation in accordance with the peeler of the invention;

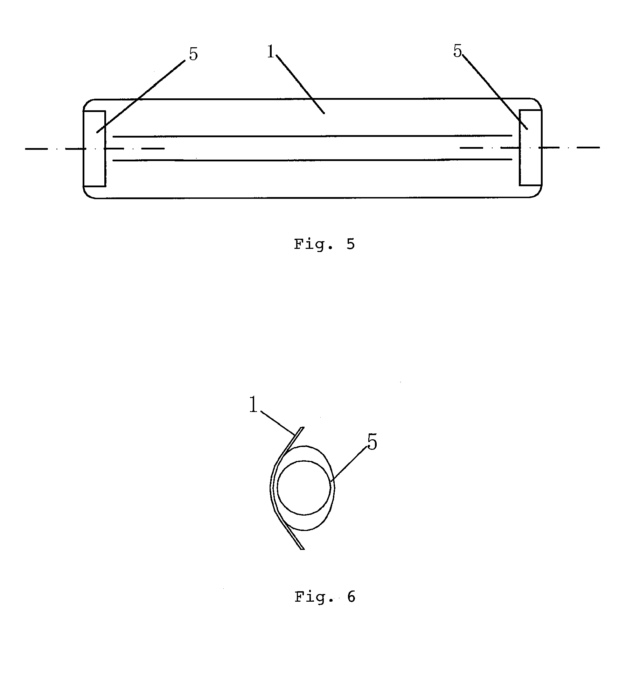

Fig. 5 is the front view structure diagram of blade of peeler in accordance with the invention;
Fig. 6 is the side-view structure diagram of blade of peeler in accordance with the invention.

In the figures: 1 refers to blade, 2 to blade bracket, 3 to handle, 4 to rotating shaft, 5 to shaft sleeve.

### Concrete embodiment

Further details will be provided in combination of figures and examples, but shouldn't be understood as the limitation to the invention.

Embodiment I pertains to A new-style peeling device comprises a blade (1) and a blade bracket (2) whose lower end is fixed with a handle. A rotating shaft (4) for supporting the blade is arranged at the top of the blade bracket (2). Ends of the blade (1) are equipped with a shaft sleeve (5) that matches the rotating shaft (4). The blade is movably connected with the rotating shaft of the blade bracket (2) through the shaft sleeve (5). Blade (1) is placed under the top of blade bracket (2); rotating shaft (4) is placed at inside of the blade bracket (2).

Embodiment II pertains to a new-style peeling device comprises a blade (1) and a blade bracket (2) whose lower end is fixed with a handle. A rotating shaft (4) for supporting the blade is arranged at the top of the blade bracket (2). Ends of the blade (1) are equipped with a shaft sleeve (5) that is matched with the rotating shaft (4). The blade is movably connected with the rotating shaft of the blade bracket (2) through the shaft sleeve (5). Blade (1) is placed under the top of blade bracket (2); rotating shaft (4) is placed at outside of the blade bracket (2).

## Claims

1. A new-style peeling device comprises a blade (1) and a blade bracket (2) whose lower end is fixed with a handle, its characteristic lies in the top of blade bracket is equipped with the rotating shaft, which is used for supporting the blade, the ends of blade (1) as described is equipped with shaft sleeve, which can match the rotating shaft, blade connect with rotating shaft of the blade bracket through this shaft sleeve.

2. A new-style peeling device as described in Claim 1, its characteristic lies in the rotating shaft is placed at inside of the blade bracket.

3. A new-style peeling device as described in Claim 1, its characteristic lies in the rotating shaft is placed at outside of the blade bracket.

4. A new-style peeling device as described in Claim 1 or 2 or 3, its characteristic lies in the blade is placed under the top of blade bracket.
